# EUROPEAN PATENT APPLICATION

(11) **EP 4 328 672 A1**
(43) Date of publication of application: **28.02.2024**
(21) Application number: 22191756.0
(22) Date of filing: 23.08.2022
(51) Int. Cl.: G03H 1/06, G03H 1/08, G03H 1/26, G01N 21/01, G01N 21/45, G03H 1/00, G03H 1/04

(54) **OBJECT MONITORING DEVICE AND METHOD**

(71) Applicant: AM-Flow Holding B.V., 1018 JA Amsterdam (NL)
(72) Inventor: JANSSEN, Nick, 1018 JA Amsterdam (NL); VAN DER SPEK, Jonathan, 1018 JA Amsterdam (NL)
(74) Representative: V.O.

(57) **Abstract**

The object monitoring device (OMD) is provided herein comprises an I-COACH imaging unit (IIU) with at least one incoherent light source (LED 1) and one or more optical elements (L1, BS1). The object monitoring device (OMD) directs a beam of light from the at least one incoherent light source (LED1) at an object side (IIUO) of the I-COACH imaging unit towards an object-carrier station (TOC) for carrying an object (OBI, OB2, OB3) to be imaged. At the object side (IIUO) the object monitoring device (OMD) receives a portion of said beam of light that is reflected by the object and it directs the received beam of light via a coded phase mask (CPM) towards a digital imaging unit. The improved object monitoring device (OMD) further comprises a beam redirection - and collection unit (BRC) that is arranged in an optical path extending between the object-carrier station (TOC) and the object-side (IIUO) of the I-COACH imaging unit. The beam redirection - and collection unit (BRC) successively redirect the received beam of light from mutually different directions towards the object carrier station. Therewith objects can be more completely imaged.

## Description

### BACKGROUND

### Field

The present application pertains to an object monitoring device.

The present application pertains to an object monitoring method.

### Related Art

A modern manufacturing site may simultaneously manufacture a large quantity of products with mutually different specifications. Therewith a plurality of production steps may be applied including additive manufacturing steps, such as 3D-printing, assembling, painting as well as subtractive manufacturing steps, such as cutting grinding and other types of manufacturing steps, such as curing. Depending on product specifications supplied by customers, a variety of products are simultaneously manufactured. In accordance with a respective product specification, a respective one or more manufacturing operations are performed with which the specified product is obtained. Product manufacturing processes for mutually different products may share one or more manufacturing steps, e.g. involve the same painting step, or involve a common 3D-printing step. Therewith an efficient use of production resources is achieved. However, it is essential that subsequent to such a common step the obtained (semi-finished) products can be efficiently redirected in accordance with their own product specification. Whereas two mutually different semi-finished products may involve a common manufacturing step, that common manufacturing step may be succeeded by mutually different manufacturing steps for each of the semi-finished products. Two mutually different end-products sharing a common manufacturing step may need to be packaged differently.

In order to properly redirect the mutually different (semi-finished) products in such a manufacturing process it is of utmost importance that the different (semi-finished) products are properly recognized. In accordance therewith the (semi-finished) product is routed, e.g. to a further production stage, a packaging station, or discarded for lack of quality. Conventional manufacturing plants typically use image recognition based on camera data. A stronger object evaluation result could be obtained with a holographic imaging approach, wherein substantially more detailed information about the monitored object is obtained.

In this connection it is noted that Rosen et al. describe various approaches to digital holography in the publication "Recent advances in self-interference incoherent digital holography" found in Advances in Optics and Photonics, February 2019, DOI: 10.1364/AOP.11.000001. One of these approaches is known as I-COACH described with reference to FIG. 47 therein. COACH, or COded Apature Correlation Hologram, is a generalized self-interfering correlation hologram. Therewith a coded phase mask (CPM) is used for beam phase modulation. FINCH is a special case in which the CPM is a defective lens (DL) mask. Background noise is minimized if the CPM is a pseudo random code-phase mask that is modified with the Gerchberg-Saxton algorithm.

The experimental setup shown in FIG. 47 of the above-mentioned publication involves two channels. In one channel, light from an incoherent light source is directed via first beam splitter BS1 to a 3D object, and a portion of the light that is reflected by the 3D object is received at an object-side of the setup via the first beam splitter BS1, and guided via a polarizer P1, a lens L2 and a second beam splitter BS2 to a spatial light modulator SLM with a coded phase mask CPM, and the spatially modulated light is directed via the second beam splitter BS2 to an image sensor. In the other channel, light from another incoherent light source is guided via a PSH library and the first beam splitter BS1 in the same direction as the received light that is reflected by the object. The other channel serves for calibration.

Whereas the known experimental setup serves to obtain a holographic image of an object, the information obtained therewith is still incomplete. Only information of the object at a side facing the setup is obtained.

### SUMMARY OF THE INVENTION

It is a first object of the present invention to provide an object monitoring device that renders it possible to obtain a more complete holographic image of an object being monitored.

It is a second object of the present invention to provide an object monitoring method that renders it possible to obtain a more complete holographic image of an object being monitored.

The first object is achieved in that the object monitoring device further comprises a beam redirection - and collection unit that is arranged in an optical path extending between an object-carrier station and the object-side of the I-COACH imaging unit. The beam redirection - and collection unit is configured to receive the beam of light from the incoherent light source (LED1) from the I-COACH imaging unit and to successively redirect the received beam of light from mutually different directions towards the object carrier station. It is also configured to collect light of the redirected beam reflected by an object in the object carrier station and to direct the reflected light to the object side (IIUO) of the I-COACH imaging unit. In this connection it is noted that "an object" is to be interpreted as "at least one object", for example a semi-finished product or a final product. It is also possible that a plurality of objects are present, which together are imaged. For clarity however, reference is made to "an object". The beam redirection - and collection unit renders it possible to obtain a more complete holographic image from the monitored object than is possible with the known setup.

In an embodiment the object monitoring device further comprises a path length divergence compensation unit that is arranged in the optical path between the beam redirection - and collection unit and the object-side of the I-COACH imaging unit. This allows for more flexibility in the design of the beam redirection - and collection unit. The path length divergence compensation unit operates synchronously with the beam redirection - and collection unit. In some embodiments an additional path length divergence compensation unit can be absent, provided that the optical paths in the successive redirections of the beam of light are mutually different, but are of equal optical path length. In some examples the path length divergence compensation unit comprises at least two path length divergence compensation lenses and a lens selection means to select a specific one of the at least two path length divergence compensation lenses. In an example, the path length divergence compensation lenses are provided next to each other in a plate, and the lens selection means select a specific one of the lenses by shifting that one in the optical path. In another example the path length divergence compensation unit comprises a lens carrier that is rotatable around an axis parallel and at a distance from the optical path, and wherein the at least two path length divergence compensation lenses are arranged at mutually different angular positions in the lens carrier, wherein the lens selection means are configured to select a specific one of the at least two path length divergence compensation lenses by a proper rotation of the lens carrier. In this example it is not necessary to shift back the lens carrier each time to select the first one of the path length divergence compensation lenses. It is sufficient that subsequent to the last one of the lenses, the lens carrier is rotated one step further to select the first lens again.

In some embodiments the object monitoring device further comprises a beam modification unit that is arranged in the optical path between the beam redirection - and collection unit and the object-side of the I-COACH imaging unit and that comprises a set of at least two magnification- and divergence compensation lenses and a beam modification lens selection means is configured to select a specific one of the at least two magnification- and divergence compensation lenses. This embodiment is particularly advantageous for application in a manufacturing site configured to manufacture a large variety of products, (semi-finished) products resulting from mutually different product specifications may have substantially different dimensions, for example having a cross-section ranging from about one mm to a few hundred mm. The beam modification lens selection means is configured to select a specific one of the at least two magnification- and divergence compensation lenses. In case a path length divergence compensation unit is provided, the beam modification unit can either be arranged in the optical path between the beam redirection - and collection unit and the path length divergence compensation unit, or between the path length divergence compensation unit and the object-side of the I-COACH imaging unit. Dependent on the circumstances one of the at least two magnification- and divergence compensation lenses can be selected. Alternatively, subsequent images can be obtained with mutually different magnification- and divergence compensation lenses. In some examples, the beam modification unit comprises a lens carrier that is rotatable around an axis parallel and at a distance from the optical path, and wherein the at least two magnification- and divergence compensation lenses are arranged at mutually different angular positions in the lens carrier, wherein the beam modification lens selection means are configured to select a specific one of the at least two magnification- and divergence compensation lenses by a proper rotation of the lens carrier. In these examples it is not necessary to shift back the lens carrier each time to select the first one of the magnification- and divergence compensation lenses. It is sufficient that subsequent to the last one of the lenses, the lens carrier is rotated one step further.

In some embodiments of the object monitoring device the beam redirection - and collection unit is configured to subsequently redirect a beam of light received from the object side of the I-COACH imaging unit (towards the one or more objects from at least four mutually different projection directions. Whereas with two projection directions already a substantially more complete holographic image is obtained, with at least four mutually different projection directions a still more information about the object is obtained. A respective digital hologram is obtained for each of the mutually different projection directions and these digital holograms are then stitched together. This is advantageous in that the angles are fixed, so that an extensive searching of overlapping sides is obviated. Theoretically the information content can be more and more improved by adding further projection directions but the material costs and the imaging time increase proportionally with the number of projection directions, whereas the marginal improvement decreases. Accordingly a selection of four mutually different projection directions is considered optimal. It is preferred that the at least four mutually different projection directions are substantially equally distributed in space. This is the case if the spatial angle between each pair of directions is the same. In the case of four directions, therewith a tetrahedron is spanned.

In some examples of an object monitoring device using at least four mutually different projection directions the beam redirection - and collection unit comprises a first and a second rotatable mirror, and a set of stationary mirror pairs. Therein the first rotatable mirror is configured to receive the directed beam of light from the object side of the I-Coach imaging unit and to selectively redirect the received beam of light to the second rotatable mirror (rM2) or redirect the received beam of light in a first projection direction towards the one or more objects. The second rotatable mirror therein is configured to selectively redirect a beam of light received from the first rotating mirror to one of the stationary mirror pairs, and the stationary mirror pairs are configured to redirect the beam of light received from the second rotatable mirror in a respective one of a second projection direction, a third projection direction and a fourth projection direction, which first, second third and fourth projections directions are mutually different. The beam redirection - and collection unit has a first, a second, a third and a fourth operational state. In the first operational state the first rotatable mirror redirects the received beam of light in a first projection direction towards the one or more objects and redirects a portion of said beam of light that is reflected by the one or more objects back in the optical path towards the object side of the I-Coach imaging unit. In the second, the third and the fourth operational state the first rotatable mirror redirects the received beam of light via the second rotatable mirror to a respective one of the stationary mirror pairs, that redirect the beam of light in the respective projection direction to the one or more objects and that redirect a portion of said beam of light that is reflected by the one or more objects via the second rotatable mirror and the first rotatable mirror back in the optical path towards the object side of the I-Coach imaging unit.

In some embodiments of the object monitoring device the I-Coach imaging unit is a two-channel imaging unit. This renders it possible to image non transparent 3D objects. This is achieved in that a reference is provided by the PSH library in the additional channel. Therewith it is avoided that the optical path needs to traverse the object to be imaged. In examples of these embodiments optical elements comprise a beam splitter that is configured to direct the beam of light from the at least one incoherent light source to the object side and to direct the received beam of light via the coded phase mask towards a digital imaging unit. In these examples the I-Coach imaging unit comprises a further incoherent light source to generate a further beam of light and an optical element to direct the further beam of light via a point spread hologram library to the beam splitter, wherein the beam splitter redirects the further beam of light via the coded phase mask towards the digital imaging unit. Despite the fact that there are two channels, the interference of the object is in only one of these channels and the point spread hologram is in the other one. Therewith effects of mechanical noise as present in a production environment are mitigated.

In some embodiments the object to be monitored may be held by a gripper or be positioned on a conveyor belt. With the plurality of redirected beams this renders it possible to more completely image the object than would be possible with the known digital holography approach. However, still a part of the object held by the gripper or the part resting on the conveyor belt is occluded in this case. Accordingly, in some embodiments the object monitoring device comprises a transparent object carrier, such as a glass plate, for carrying the objects to be imaged, wherein the mutually different directions comprise at least one direction wherein the beam redirection - and collection unit redirects the received beam of light via the transparent object carrier and collects a portion light of the redirected beam reflected by the one or more objects via the transparent, non-reflective carrier. Therewith the object to be imaged is visible from all sides and therewith can be completely imaged. In examples of these embodiments the object monitoring device further comprises an object-positioning device comprising an object manipulation element. The object-positioning device is configured to intercept the one or more objects with the manipulation element on a first movable carrier in a first operational stage, to position the one or more objects with the manipulation element on the transparent carrier in a second operational stage, to allow the one or more objects to remain on the transparent carrier in a third operational stage in which the one or more objects are to be imaged, to remove the one or more objects from the transparent carrier and to therewith position them on a second movable carrier in a fourth operational stage. This provides for an efficient way to incorporate the object-monitoring device in a production stream in a manufacturing system. The second movable carrier is for example a selected one of a plurality of second movable carriers that further transport the monitored object to a respective further manufacturing stage or packaging stage. Likewise it is possible that the first movable carrier is one of a plurality of movable carriers that transport the object to be monitored from a respective preceding manufacturing stage.

The second object is achieved with an improved method of monitoring an object with an I-COACH imaging unit comprising at least one incoherent light source and one or more optical elements. The improved method comprises directing a beam of light from the at least one incoherent light source at an object side of the I-COACH imaging unit towards an object-carrier station for carrying an object to be imaged. For each direction of a plurality of successive directions towards the object the received beam of light is redirected according to said each direction towards the object, light of said redirected beam that is reflected by the object is collected and directed via the object side of the I-COACH imaging unit direct via a coded phase mask towards a digital imaging unit.

### BRIEF DESCRIPTION OF THE DRAWINGS

These and other aspects are described in more detail with reference to the drawing. Therein:
FIG. 1 schematically shows an embodiment of the improved object monitoring device comprising an I-COACH imaging unit IIU;
FIG. 2 shows an example of an object-positioning device suitable for use in combination with embodiments of the improved object monitoring device;
FIG. 3 schematically shows an embodiment of the improved object monitoring method.
FIG. 4A, 4B schematically show a procedure for reconstructing a 3D image of an object.

### DETAILED DESCRIPTION OF EMBODIMENTS

Like reference symbols in the various drawings indicate like elements unless otherwise indicated.

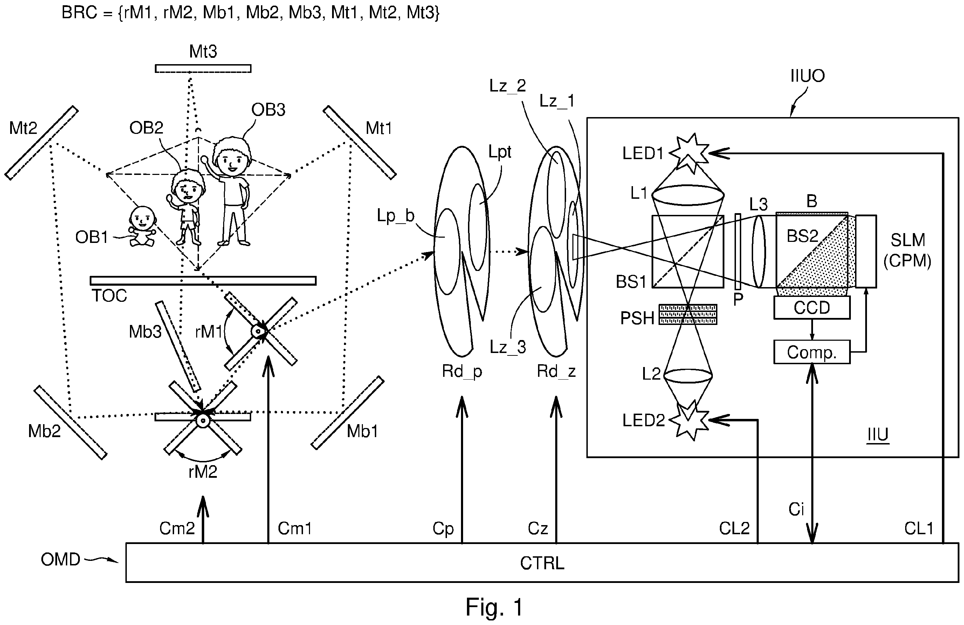

FIG. 1 schematically shows an object monitoring device OMD comprising an I-COACH imaging unit IIU. The I-COACH imaging unit IIU has at least one incoherent light source LED1 and one or more optical elements L1, BS1 that are configured to direct a beam of light from the at least one incoherent light source LED1 at an object side IIUO of the I-COACH imaging unit towards an object-carrier station TOC for carrying an object to be imaged. In the example shown a plurality of objects OB1, OB2, OB3 are present that are simultaneously imaged. At its object side IIUO the I-COACH imaging unit IIU receives a portion of the beam of light that is reflected by the object(s) and the optical elements direct the received beam of light via a coded phase mask CPM towards a digital imaging unit CCD.

As shown in FIG. 1, the object monitoring device further comprises a beam redirection - and collection unit BRC, in the embodiment shown comprising optical elements that is arranged in an optical path extending between the object-carrier station TOC and the object-side IIUO of the I-COACH imaging unit. Operation of the beam redirection - and collection unit BRC and other components is controlled by a controlled CTRL. The beam redirection - and collection unit is configured to receive the beam of light from the incoherent light source LED1 from the I-COACH imaging unit, to successively redirect the received beam of light from mutually different directions towards the object carrier station, to collect light of the redirected beam reflected by the object and to direct the reflected light to the object side IIUO of the I-COACH imaging unit.

The embodiment of the object monitoring device OMD shown in FIG. 1 also comprises a path length divergence compensation unit Rd_p that is arranged in the optical path between the beam redirection - and collection unit BRC and the object-side IIUO of the I-COACH imaging unit IIU. This allows for more flexibility in the design of the beam redirection - and collection unit. The path length divergence compensation unit Rd_p, which is also controlled by the controller CTRL with a control signal Cp, operates synchronously with the beam redirection - and collection unit. In alternative embodiments an additional path length divergence compensation unit Rd_p can be absent, provided that the optical paths in the successive redirections of the beam of light are mutually different, but are of equal optical path length.

In the embodiment shown in FIG. 1, the path length divergence compensation unit Rd_p comprises at least two path length divergence compensation lenses Lp_b and Lp_t and a lens selection means to select a specific one of the at least two path length divergence compensation lenses. In the example of FIG. 1 the path length divergence compensation unit Rd_p comprises a lens carrier that is rotatable around an axis parallel and at a distance from the optical path. The path length divergence compensation lenses Lp_b, Lp_t are arranged at mutually different angular positions in the lens carrier and in operation a specific one of the path length divergence compensation lenses is selected by a proper rotation of the lens carrier as determined by the control signal Cp. In an alternative example, the path length divergence compensation lenses are provided next to each other in a plate, and the lens selection means select a specific one of the lenses by shifting that one in the optical path. It is an advantage of the embodiment shown in FIG. 1 that it is not necessary to shift back the lens carrier each time to select the first one of the path length divergence compensation lenses. It is sufficient that subsequent to the last one of the lenses, the lens carrier is rotated one step further to select the first lens again.

The object monitoring device shown in FIG. 1 further comprises a beam modification unit Rd_z that is arranged in the optical path between the beam redirection - and collection unit BRC and the object-side IIUO of the I-COACH imaging unit IIU. The beam modification unit Rd_z, which is also controlled by the controller CTRL, comprises a set of at least two magnification- and divergence compensation lenses and a beam modification lens selection means that is configured to select a specific one of the at least two magnification- and divergence compensation lenses. Therewith the embodiment of the object monitoring device in FIG. 1 is very suitable for application in a manufacturing site configured to manufacture a large variety of products (e.g. semi-finished products or end-products). As an example, the variety of products for example have a cross-section ranging from about one mm to a few hundred mm. The beam modification lens selection means, which is controlled by the control signal Cz of the controller CTRL, is configured to select a specific one of the at least two magnification- and divergence compensation lenses. In the embodiment shown, wherein also a path length divergence compensation unit Rd_p is provided, the beam modification unit Rd_z is arranged in the optical path between the path length divergence compensation unit Rd_p and the object-side IIUO of the I-COACH imaging unit IIU. In an alternative example the beam modification unit Rd_z is arranged in the optical path between the beam redirection - and collection unit BRC and the path length divergence compensation unit Rd_p.

Dependent on the circumstances one of the at least two magnification- and divergence compensation lenses is selected. Alternatively subsequent images can be obtained with mutually different magnification- and divergence compensation lenses, for example in a case as shown in FIG. 1, where various objects OB1, OB2, OB3 are imaged simultaneously. It is noted that in the example as shown in FIG. 1 the beam modification unit Rd_z comprises a lens carrier that is rotatable around an axis parallel and at a distance from the optical path. The at least two magnification- and divergence compensation lenses Lz_1, Lz_2, Lz_3 are arranged at mutually different angular positions in the lens carrier. The beam modification lens selection means are configured to select a specific one of the at least two magnification- and divergence compensation lenses by a proper rotation of the lens carrier as controlled by the control signal Cz. This is advantageous in particular if it is desired to subsequently obtain images with mutually different magnification- and divergence compensation lenses. It is then not necessary to shift back the lens carrier each time to select the first one of the magnification- and divergence compensation lenses. It is sufficient that subsequent to the last one of the lenses, the lens carrier is rotated one step further.

In the embodiment shown in FIG. 1, the beam redirection - and collection unit, which is controlled by control signals Cm1, Cm2 of the controller CTRL, is configured to subsequently redirect a beam of light received from the object side IIUO of the I-COACH imaging unit IIU towards the one or more objects from at least four mutually different projection directions. Therewith a very good overall image can be obtained of the outer surface of the object. The digital holograms obtained for each of the directions are stitched together, with the advantage that the angles are fixed, so no extensive searching of overlapping sides are required. In the example shown the four mutually different projection directions are substantially equally distributed in space. In other words, the spatial angle between each pair of directions is the same. Therewith, in this case of four directions, a tetrahedron is spanned.

In the embodiment of the object monitoring device shown in FIG. 1, the beam redirection - and collection unit BRC comprises a first and a second rotatable mirror rM1, rM2 and a set of stationary mirror pairs Mb1,Mt1; Mb2, Mt2; Mb3, Mt3. The first rotatable mirror rM1, controlled by signal Cm1, is configured to receive the directed beam of light from the object side IIUO of the I-Coach imaging unit IIU and to selectively redirect the received beam of light to the second rotatable mirror rM2 or in a first projection direction towards the one or more objects. The second rotatable mirror rM2, controlled by signal Cm2, is configured to selectively redirect a beam of light received from the first rotating mirror rM1 to one of the stationary mirror pairs. On their turn the stationary mirror pairs are configured to redirect the beam of light received from the second rotatable mirror rM2 in a respective one of a second projection direction, a third projection direction and a fourth projection direction, which first, second third and fourth projections directions are mutually different. The beam redirection - and collection unit has a first, a second, a third and a fourth operational state. In the first operational state the first rotatable mirror rM1 redirects the received beam of light in a first projection direction towards the one or more objects and redirects a portion of said beam of light that is reflected by the one or more objects back in the optical path towards the object side IIUO of the I-Coach imaging unit IIU. In the second, the third and the fourth operational state the first rotatable mirror rM1 redirects the received beam of light via the second rotatable mirror rM2 to a respective one Mb1, Mt1 of the stationary mirror pairs. The respective one Mb1, Mt1 of the stationary mirror pairs redirect the beam of light in the respective projection direction to the one or more objects and redirect a portion of said beam of light that is reflected by the one or more objects via the second rotatable mirror rM2 and the first rotatable mirror rM1 back in the optical path towards the object side IIUO of the I-Coach imaging unit IIU.

It is noted that the embodiment of the object monitoring device shown in FIG. 1 comprises a two-channel I-Coach imaging unit IIU. This renders it possible to image non transparent 3D objects. This is achieved in that a reference is provided by the PSH library in the additional channel. Therewith it is avoided that the optical path needs to traverse the object to be imaged. Despite the fact that there are two channels, the interference of the object is in only one of these channels and the point spread hologram is in the other one. Therewith effects of mechanical noise as present in a production environment are mitigated. The optical elements in the two-channel I-Coach imaging unit IIU in the object monitoring device of FIG. 1 comprise a beam splitter BS1 that is configured to direct the beam of light from the at least one incoherent light source LED1 to the object side IIUO and to direct the received beam of light via the coded phase mask CPM towards a digital imaging unit. The two-channel I-Coach imaging unit IIU comprises a further incoherent light source LED2 to generate a further beam of light and an optical element L2 to direct the further beam of light via a point spread hologram library PSH to the beam splitter BS1. The beam splitter redirects the further beam of light via the coded phase mask CPM towards the digital imaging unit CCD. The controller CTRL provides control signals CL1, CL2 for the incoherent light sources LED1, LED2 respectively and cooperates via an interface Ci with the processor Comp that processes the output of the digital imaging unit CCD and controls the coded phase mask CPM.

The embodiment of the object monitoring device OMD shown in FIG. 1 comprises a transparent object carrier TOC, such as a glass plate or a polymer plate to carry the objects to be imaged. The mutually different directions comprise at least one direction wherein the beam redirection - and collection unit BRC redirects the received beam of light via the transparent object carrier TOC and collects a portion light of the redirected beam reflected by the one or more objects via the transparent carrier. The transparent object carrier transmits at least 50%, preferably at least 90%, more preferably at least 95% and even more preferably at least 99% of the optical radiation used in the arrangement. The transparent object carrier preferably is of a substantially non-reflective nature. That is not more than 10% of the optical radiation as used in the arrangement is reflected, preferably not more than 5% is reflected. Still more preferably, not more than 1% is reflected. The arrangement as shown in FIG. 1 wherein the object(s) is/are carried by the transparent object carrier TOC renders it possible to completely image the object with the plurality of redirected beams.

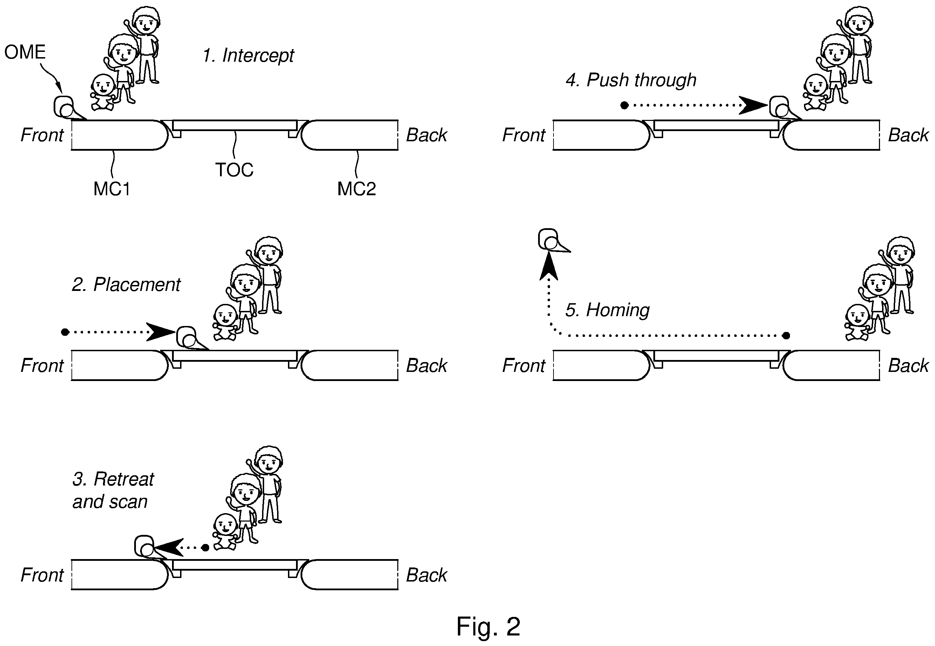

As shown schematically in FIG. 2, in some examples embodiments of the object monitoring device further comprise an object-positioning device. The object-positioning device in this example comprises an object manipulation element OME, such as a swing arm or a gripper. In the example shown in FIG. 2 the object-positioning device is configured to perform the following operations indicated by the numbers 1 - 5 in FIG. 2. In a first operational stage (1) it intercepts the one or more objects with the manipulation element OME on a first movable carrier MC1, e.g. a conveyor belt. In a second operational stage (2) it positions the one or more objects with the manipulation element on the transparent carrier TOC. In a third operational stage (3) it allows the one or more objects to remain on the transparent carrier (TOC in which the one or more objects are to be imaged. In the fourth operational stage (4) it removes the one or more objects from the transparent carrier to therewith position them on a second movable carrier MC2, e.g. a conveyor belt. In the fifth operational stage (5) the object manipulation element OME returns to its original position so that it is ready to intercept a next object. In this way the object-monitoring device is incorporated in an efficient way in a production stream in a manufacturing system. The first movable carrier MC1 is for example one of a plurality of first movable carriers that transport the object to be monitored from a respective preceding manufacturing stage. The second movable carrier MC2 is for example a selected one of a plurality of second movable carriers that further transport the monitored object to a respective further manufacturing stage or packaging stage.

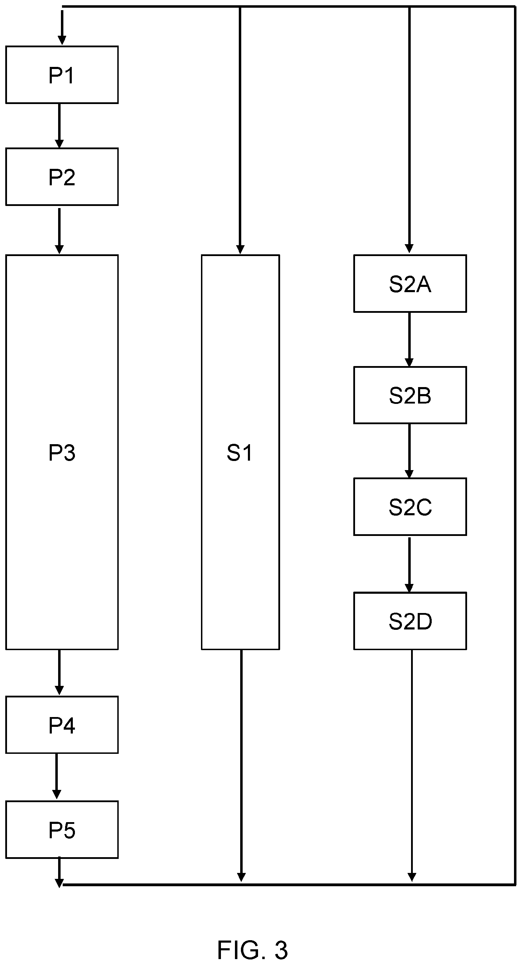

FIG. 3 illustrates an improved method of monitoring an object with an I-COACH imaging unit IIU comprising at least one incoherent light source LED 1 and one or more optical elements L1, BS1. The I-Coach imaging unit IIU is for example provided in the embodiment as shown in FIG. 1 or one of the variations thereof as discussed in the present application

The method comprises directing (S1)a beam of light from the at least one incoherent light source LED1 at the object side IIUO of the I-COACH imaging unit towards the object-carrier station TOC) that in this example carries object OB1, OB2, OB3 to be imaged.

While the beam of light is directed a sequence of sub-steps S2A, S2B, S2C, S2D is performed, one for each direction of a plurality of mutually different directions towards the object. In this case the method is performed for four mutually different directions

In each of the steps S2A, S2B, S2C, S2D the received beam of light is redirected according to the selected direction of that step towards the object, light of the redirected beam that is reflected by the object is collected and the reflected light is redirected via the object side IIUO of the I-COACH imaging unit via a coded phase mask CPM towards the digital imaging unit.

In the embodiment shown in FIG. 1, the direction of the beam of light is determined by the orientation of the rotatable mirrors rM1 and rM2.

For example in sub-step S2B, the rotatable mirror rM1 is oriented such that the beam of light emitted at the object side IIUO of the I-COACH imaging unit is redirected via the pair of rotatable mirrors towards the fixed mirror MB3 via the transparent object carrier TOC to the objects placed thereon. Light of the redirected beam that is reflected by the objects via the transparent object carrier is collected and directed by the fixed mirror MB3, the second rotatable mirror rM2 and the first rotatable mirror via the object side IIUO of the I-COACH imaging unit direct via a coded phase mask CPM towards the digital imaging unit.

For example in step S2A the first rotatable mirror rM1 redirects the beam of light that is emitted at the object side IIUO of the I-COACH imaging unit in a first projection direction via the transparent object carrier TOC to the objects placed thereon. Light of the redirected beam that is reflected by the objects via the transparent object carrier is collected and directed by the first rotatable mirror rM1 via the object side IIUO of the I-COACH imaging unit via the coded phase mask CPM towards the digital imaging unit.

In the second, the third and the fourth operational state the first rotatable mirror redirects the received beam of light via the second rotatable mirror to a respective one of the stationary mirror pairs, that redirect the beam of light in the respective projection direction to the one or more objects and that redirect a portion of said beam of light that is reflected by the one or more objects via the second rotatable mirror and the first rotatable mirror back in the optical path towards the object side of the I-Coach imaging unit.

In the example shown, the optical path further comprises a path length divergence compensation unit Rd_p that is arranged in the optical path between the beam redirection - and collection unit BRC and the object-side IIUO of the I-COACH imaging unit IIU. The path length divergence compensation unit Rd_p operates synchronously with the beam redirection - and collection unit to compensate path length differences between the optical paths in mutually different operational states of the beam redirection - and collection unit BRC. In the example shown, the optical path further comprises a beam modification unit Rd_z that is arranged in the optical path between the beam redirection - and collection unit BRC and the object-side IIUO of the I-COACH imaging unit IIU. In the embodiment shown, the beam modification unit Rd_z comprises three magnification- and divergence compensation lenses. In operation a beam modification lens selection means selects a specific one of the three magnification- and divergence compensation lenses. In an example, the beam modification lens selection means successively selects each of the three magnification- and divergence compensation lenses for each of the directions selected by the beam redirection - and collection unit BRC.

The subsequent states in this example can be represented in the following table:

| **Step** | **path** | **Rd-p** | **Rd-z** |
|---|---|---|---|
| S2A | rM1 | Lp_b | Lz_1 |
| S2A | rM1 | Lp_b | Lz_2 |
| S2A | rM1 | Lp_b | Lz_3 |
| S2B | rM1, rM2, Mb1, Mt1 | Lp_t | Lz_1 |
| S2B | rM1, rM2, Mb1, Mt1 | Lp_t | Lz_2 |
| S2B | rM1, rM2, Mb1, Mt1 | Lp_t | Lz_3 |
| S2C | rM1, rM2, Mb2, Mt2 | Lp_t | Lz_1 |
| S2C | rM1, rM2, Mb2, Mt2 | Lp_t | Lz_2 |
| S2C | rM1, rM2, Mb2, Mt2 | Lp_t | Lz_3 |
| S2D | rM1, rM2, Mb3, Mt3 | Lp_t | Lz_1 |
| S2D | rM1, rM2, Mb3, Mt3 | Lp_t | Lz_2 |
| S2D | rM1, rM2, Mb3, Mt3 | Lp_t | Lz_3 |

The left column indicates the state of the beam redirection - and collection unit BRC. The second column specifies the optical elements of the beam redirection - and collection unit BRC in the optical path. The third column shows the state of the path length divergence compensation unit Rd_p. The state of the path length divergence compensation unit Rd_p which is indicated by the selected one of the path length divergence compensation lenses Lp_b, Lp_t. The fourth column shows the state of the beam modification unit Rd_z, by the indication of the selected one of the magnification- and divergence compensation lenses Lz_1, Lz_2, Lz_3.

For example in step S2A, the orientation of the rotatable mirror rM1 is such that it redirects the beam of light emitted at the object side IIUO of the I-COACH imaging unit via the transparent object carrier TOC to the objects placed thereon. Light of the redirected beam that is reflected by the objects via the transparent object carrier is collected and directed by the rotatable rM1 via the object side IIUO of the I-COACH imaging unit via a coded phase mask CPM towards the digital imaging unit.

For example in step S2B, the orientation of the rotatable mirror rM1 is such that it redirects the beam of light emitted at the object side IIUO of the I-COACH imaging unit towards the second rotatable mirror rM2 via the pair of fixed mirrors Mb1, Mt1 toward the objects on the object carrier TOC. Light of the redirected beam that is reflected by the objects is collected and directed via the pair of fixed mirrors Mt1, Mb1, the second rotatable mirror rM2 and the first rotatable mirror rM1 via the object side IIUO of the I-COACH imaging unit via the coded phase mask CPM towards the digital imaging unit.

Similarly, in step S2C the optical path is defined by the first and the second rotatable mirror rM1, rM2 and the pair of fixed mirrors Mb2, Mt2. Likewise in step S2D the optical path is defined by the first and the second rotatable mirror rM1, rM2 and the pair of fixed mirrors Mb3, Mt3.

In another example, the beam redirection - and collection unit BRC successively selects each of its four directions for each of the selected magnification- and divergence compensation lenses.

The subsequent states are shown in the following table:

| **Step** | **Path** | **Rd-p** | **Rd-z** |
|---|---|---|---|
| S2A | rM1 | Lp_b | Lz_1 |
| S2B | rM1, rM2, Mb1, Mt1 | Lp_t | Lz_1 |
| S2C | rM1, rM2, Mb2, Mt2 | Lp_t | Lz_1 |
| S2D | rM1, rM2, Mb3, Mt3 | Lp_t | Lz_1 |
| S2A | rM1 | Lp_b | Lz_2 |
| S2B | rM1, rM2, Mb1, Mt1 | Lp_t | Lz_2 |
| S2C | rM1, rM2, Mb2, Mt2 | Lp_t | Lz_2 |
| S2D | rM1, rM2, Mb3, Mt3 | Lp_t | Lz_2 |
| S2A | rM1 | Lp_b | Lz_3 |
| S2B | rM1, rM2, Mb1, Mt1 | Lp_t | Lz_3 |
| S2C | rM1, rM2, Mb2, Mt2 | Lp_t | Lz_3 |
| S2D | rM1, rM2, Mb3, Mt3 | Lp_t | Lz_3 |

Likewise the left column indicates the state of the beam redirection - and collection unit BRC. The second column specifies the optical elements of the beam redirection - and collection unit BRC in the optical path. The third column shows the state of the path length divergence compensation unit Rd_p. The state of the path length divergence compensation unit Rd_p which is indicated by the selected one of the path length divergence compensation lenses Lp_b, Lp_t. The fourth column shows the state of the beam modification unit Rd_z, by the indication of the selected one of the magnification- and divergence compensation lenses Lz_1, Lz_2, Lz_3.

FIG. 3 further shows the method in cooperation with an object-positioning device as shown in FIG. 2.

Herein, the first operational stage (1) wherein the object-positioning device intercepts the one or more objects with the manipulation element OME on a first movable carrier MC1 is shown as a step P1. The second operational stage (2) wherein it positions the one or more objects with the manipulation element on the transparent carrier TOC is indicated as a step P2. The third operational stage (3) wherein it allows the one or more objects to remain on the transparent carrier TOC while object monitoring steps S1 and S2A, S2B, S2C and S2D are performed is indicated as a step P3. The fourth operational stage (4) wherein the manipulation element OME removes the one or more objects from the transparent carrier TOC and the fifth operational stage (5) the object manipulation element OME returns to its original position are shown as steps P4 and P5 respectively.

The steps jointly performed by the object-positioning device object monitoring can be repeated an arbitrarily number of times as shown in FIG. 3.

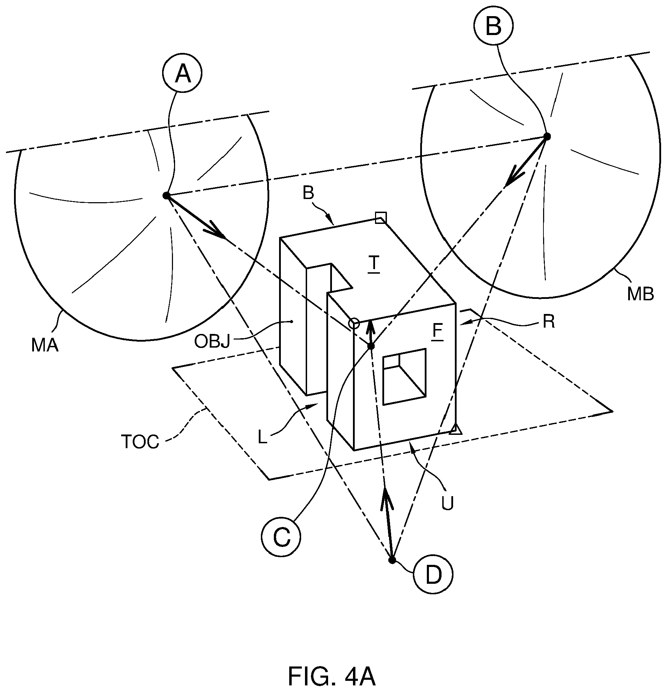

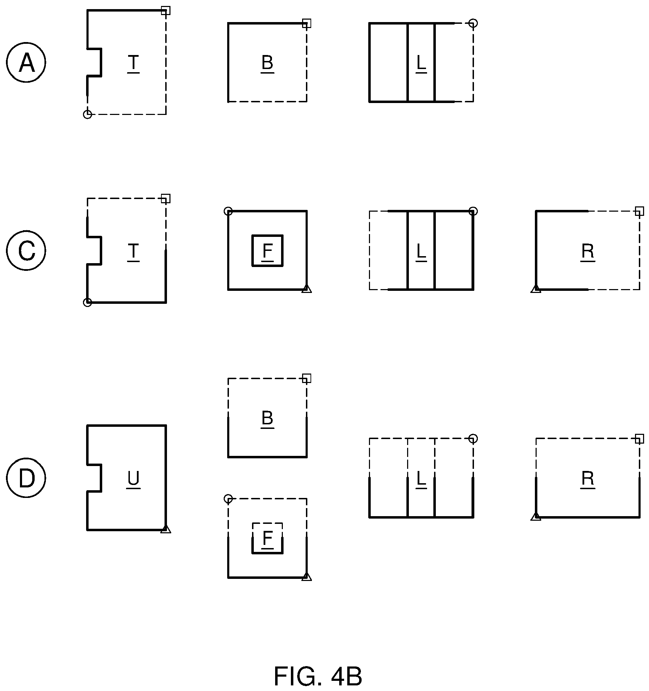

FIG. 4A, 4B schematically show a procedure for reconstructing a 3D image of an object OBJ, which in this example resembles a cube with cutouts L and F. Therein FIG. 4A shows an exemplary object OBJ positioned on a transparent object carrier TOC. FIG. 4A further shows corners A, B, C, D of an (imaginary) tetrahedron. Four mirrors are arranged each with a central position of their mirror surface at a respective one of the corners and the four mirrors each face the center of the tetrahedron as indicated by the arrows pointing away from the corners. Two of the mirrors MA, MB having their center at the corners A,B respectively are shown. For clarity the mirrors at the corners C, D are not shown. In this example it is presumed that the transparent object carrier TOC is arranged in the horizontal plane, although deviations may be possible, as long as the object OBJ does not slip away from its position. Alternatively, the object OBJ may be clamped with a holder, but that has the disadvantage that the object OBJ is partly occluded. In this example it is further presumed that the set of mirrors is arranged such that the mirror at corner D faces in the vertical direction. The set of mirrors arranged at the corners A-D of the tetrahedron may however have any other orientation.

FIG. 4B shows in a matrix the object as it is visible from mirrors A,C and D. The matrix shows for each of these mirrors one or more faces T/F/B/L/R/U of the object that are visible via that mirror. The characters T/F/B/L/R/U therein respectively denote Top, Front, Back, Left, Right, Under.
The first row A shows the faces of the object OBJ that are visible via the mirror at corner A. These are the top face T, the back face B and the left face L.
The second row C shows the faces of the object OBJ that are visible via the mirror at corner C. These are the top face T, the front face F, the left face L and the right face R. The last row D shows the faces of the object OBJ that are visible via the mirror at corner D. These are the under face U, the front face F, the left face L, the right face R and back face B (shown below face F). The faces visible from mirror B are not shown in this drawing.

The combination of views from the four mirrors renders it possible to construct a complete 3D image of the object OBJ.
The construction of the 3D image is achieved in the following steps.
a) Via each of the four mirrors a phase image of the object OBJ is obtained with the I-COACH imaging method as disclosed herein.
b) The phase images (the holograms) are each converted into a partial 3D model of the object OBJ.
c) The four partial 3D models are combined into a complete 3D model. This step can be performed with a stitching algorithm, known as such, for example from https://en.wikipedia.org/wiki/Digital_holography#Combining_of_holograms_and_i nterferometric_microscopy and the references cited therein. Optionally therein post-processing operations like brushing away bonding lines or partial shadows can be performed.

Therewith a 3D scan of the object OBJ is obtained that can be provided as an input to a quality check and/or an identification procedure.

Stitching of the partial 3D models in step c) is relatively simple as the mirrors via which the various views are obtained have a predetermined position and orientation. Optionally alignment can be further facilitated by using one or more fiducials that are visible via two or more of the mirrors. For example a fiducial may be provided on the transparent object carrier TOC. This is visible from each point of view and can serve for the purpose of a calibration in the absence of an object on the transparent object carrier TOC.

In the claims the word "comprising" does not exclude other elements or steps, and the indefinite article "a" or "an" does not exclude a plurality. A single component or other unit may fulfill the functions of several items recited in the claims. The mere fact that certain measures are recited in mutually different claims does not indicate that a combination of these measures cannot be used to advantage. Any reference signs in the claims should not be construed as limiting the scope.

## Claims

1. An object monitoring device (OMD) comprising an I-COACH imaging unit (IIU) comprising at least one incoherent light source (LED 1) and one or more optical elements (L1, BS1) configured to
direct a beam of light from the at least one incoherent light source (LED1) at an object side (IIUO) of the I-COACH imaging unit towards an object-carrier station (TOC) for carrying an object (OB1, OB2, OB3) to be imaged,
receive at said object side (IIUO) a portion of said beam of light reflected by the object,
direct the received beam of light via a coded phase mask (CPM) towards a digital imaging unit,
**characterized in that** the object monitoring device further comprises a beam redirection - and collection unit (BRC) arranged in an optical path extending between the object-carrier station (TOC) and the object-side (IIUO) of the I-COACH imaging unit,
wherein the beam redirection - and collection unit is configured:
to receive the beam of light from the incoherent light source (LED 1) from the I-COACH imaging unit;
to successively redirect the received beam of light from mutually different directions towards the object carrier station;
to collect light of the redirected beam reflected by the object; and
to direct the reflected light to the object side (IIUO) of the I-COACH imaging unit.

2. The object monitoring device (OMD) according to claim 1, further comprising a path length divergence compensation unit (Rd_p) that is arranged in the optical path between the beam redirection - and collection unit (BRC) and the object-side (IIUO) of the I-COACH imaging unit (IIU).

3. The object monitoring device according to claim 2, wherein the path length divergence compensation unit (Rd_p) comprises at least two path length divergence compensation lenses (Lp_b and Lp_t) and a lens selection means to select a specific one of the at least two path length divergence compensation lenses.

4. The object monitoring device according to claim 3, wherein the path length divergence compensation unit (Rd_p) comprises a lens carrier that is rotatable around an axis parallel and at a distance from the optical path, and wherein the at least two path length divergence compensation lenses (Lp_b, Lp_t) are arranged at mutually different angular positions in the lens carrier, wherein the lens selection means are configured to select a specific one of the at least two path length divergence compensation lenses by a proper rotation of the lens carrier.

5. The object monitoring device according to one of the preceding claims, further comprising a beam modification unit (Rd_z) that is arranged in the optical path between the beam redirection - and collection unit (BRC) and the object-side (IIUO) of the I-COACH imaging unit (IIU) and that comprises a set of at least two magnification- and divergence compensation lenses and a beam modification lens selection means is configured to select a specific one of the at least two magnification- and divergence compensation lenses.

6. The object monitoring device according to claim 5, wherein the beam modification unit (Rd_z) comprises a lens carrier that is rotatable around an axis parallel and at a distance from the optical path, and wherein the at least two magnification- and divergence compensation lenses (Lz_1, Lz_2, Lz_3) are arranged at mutually different angular positions in the lens carrier, wherein the beam modification lens selection means are configured to select a specific one of the at least two magnification- and divergence compensation lenses by a proper rotation of the lens carrier.

7. The object monitoring device according to either of the preceding claims, wherein the beam redirection - and collection unit is configured to subsequently redirect a beam of light received from the object side (IIUO) of the I-COACH imaging unit (IIU) towards the one or more objects from at least four mutually different projection directions.

8. The object monitoring device according to claim 7, wherein the at least four mutually different projection directions are substantially equally distributed in space.

9. The object monitoring device according to claim 7 or 8, wherein the beam redirection - and collection unit (BRC) comprises a first and a second rotatable mirror (rM1, rM2), and a set of stationary mirror pairs (Mb1,Mt1; Mb2, Mt2; Mb3, Mt3) wherein the first rotatable mirror (rM1) is configured to receive the directed beam of light from the object side (IIUO) of the I-Coach imaging unit (IIU), and to selectively redirect the received beam of light to the second rotatable mirror (rM2) or in a first projection direction towards the one or more objects, wherein the second rotatable mirror (rM2) is configured to selectively redirect a beam of light received from the first rotating mirror (rM1) to one of the stationary mirror pairs, wherein the stationary mirror pairs are configured to redirect the beam of light received from the second rotatable mirror (rM2) in a respective one of a second projection direction, a third projection direction and a fourth projection direction, which first, second third and fourth projections directions are mutually different, wherein the beam redirection - and collection unit has a first, a second, a third and a fourth operational state, wherein in the first operational state the first rotatable mirror (rM1) redirects the received beam of light in a first projection direction towards the one or more objects and redirects a portion of said beam of light that is reflected by the one or more objects back in the optical path towards the object side (IIUO) of the I-Coach imaging unit (IIU), wherein in the second, the third and the fourth operational state the first rotatable mirror (rM1) redirects the received beam of light via the second rotatable mirror (rM2) to a respective one (Mb1, Mt1) of the stationary mirror pairs, that redirect the beam of light in the respective projection direction to the one or more objects and that redirect a portion of said beam of light that is reflected by the one or more objects via the second rotatable mirror (rM2) and the first rotatable mirror (rM1) back in the optical path towards the object side (IIUO) of the I-Coach imaging unit (IIU).

10. The object monitoring device according to either of the preceding claims, wherein the I-Coach imaging unit (IIU) is a two-channel imaging unit.

11. The object monitoring device according to claim 10, wherein optical elements comprise a beam splitter (BS1) that is configured to direct the beam of light from the at least one incoherent light source (LED1) to the object side (IIUO) and to direct the received beam of light via the coded phase mask (CPM) towards a digital imaging unit, and wherein the I-Coach imaging unit (IIU) comprises a further incoherent light source (LED2) to generate a further beam of light and an optical element (L2) to direct the further beam of light via a point spread hologram library (PSH) to the beam splitter (BS1), wherein the beam splitter redirects the further beam of light via the coded phase mask (CPM) towards the digital imaging unit (CCD).

12. The object monitoring device (OMD) according to either of the preceding claims, comprising a transparent object carrier TOC for carrying the objects to be imaged, wherein the mutually different directions comprise at least one direction wherein the beam redirection - and collection unit (BRC) redirects the received beam of light via the transparent object carrier (TOC ) and collects a portion light of the redirected beam reflected by the one or more objects via the transparent, non-reflective carrier.

13. The object monitoring device according to claim 12, further comprising an object-positioning device comprising an object manipulation element (OME), the object-positioning device being configured to intercept (1) the one or more objects with the manipulation element on a first movable carrier (MC1)) in a first operational stage, to position (2) the one or more objects with the manipulation element on the transparent carrier in a second operational stage, to allow the one or more objects to remain (3) on the transparent carrier (TOC) in a third operational stage in which the one or more objects are to be imaged, to remove (4) the one or more objects from the transparent carrier and to therewith position them on a second movable carrier (MC2) in a fourth operational stage.

14. A method of monitoring an object with an I-COACH imaging unit (IIU) comprising at least one incoherent light source (LED 1) and one or more optical elements (L1, BS1), the method comprising:
directing a beam of light from the at least one incoherent light source (LED1) at an object side (IIUO) of the I-COACH imaging unit towards an object-carrier station (TOC) for carrying an object (OB1, OB2, OB3) to be imaged,
for each direction of a plurality of successive directions towards the object:
redirecting the received beam of light according to said each direction towards the object, collecting light of said redirected beam that is reflected by the object and directing the reflected light via the object side (IIUO) of the I-COACH imaging unit via a coded phase mask (CPM) towards a digital imaging unit.
